**Europäisches Patentamt**

**European Patent Office**

**Office européen des brevets**

(19)

(11) Publication number: **0 174 321 B1**

## EUROPEAN PATENT SPECIFICATION

(45) Date of publication of the patent specification: **29.06.88**

(51) Int. Cl.⁴: **G 02 B 6/26, F 21 S 5/00**

(21) Application number: **85900936.7**

(22) Date of filling: **05.02.85**

(86) International application number: **PCT/US 85/00176**

(87) International publication number: **WO 85/03781 (29.08.85 Gazette 85/19)**

(54) **HYPERHEMISPHERICAL RADIATION SYSTEM.**

(30) Priority: **16.02.84 US 580974**

(43) Date of publication of application: **19.03.86 Bulletin 86/12**

(45) Publication of the grant of the patent: **29.06.88 Bulletin 88/26**

(84) Designated Contracting States: **BE DE FR GB NL SE**

(56) References cited:
**DE-A-2 700 171**
**GB-A-1 586 188**
**US-A-2 921 552**
**US-A-3 274 392**

(73) Proprietor: **Hughes Aircraft Company, 7200 Hughes Terrace P.O. Box 45066, Los Angeles California 90045- 0066 (US)**

(72) Inventor: **MYER, Jon, H., 22931 Gershwin Drive, Woodland Hills, CA 91364 (US)**

(74) Representative: **Colgan, Stephen James, CARPMAELS & RANSFORD 43 Bloomsbury Square, London WC1A 2RA. (GB)**

## Description

This invention relates to optical radiation waveguides such as fiber optics having small input and output apertures and, more particularly, to a radiation source or detection system coupled to the aperture of an optical fiber for providing an input or output port capable of covering a large solid angle, in excess of a hemisphere, for said radiation.

Optical radiation conduits such as optical fibers are widely used in communication and other optical signal transmission applications. A characteristic of an optical fiber is its small diameter and the well defined and limited viewing angle through which radiation can be received or transmitted. The input or output cone angle field of view is an inherent property of the fiber and is determined by the refractive indices of the glasses from which the fiber is made.

Lenses and mirrors have been used for increasing the numerical aperture of conventional optical systems. However, the laws of geometric optics and the rule of conservation of brightness in an optical system limit the allowable increase of field of view attainable by lenses or reflectors for a given aperture. Thus a particular fiber with a particular combination of diameter and glass composition will have a fixed throughput or étendue. This means that an increase of field of view can only be obtained by reducing the diameter of the aperture of the fiber. The inherent small diameter of the fiber core (50 micrometers) makes this impractical.

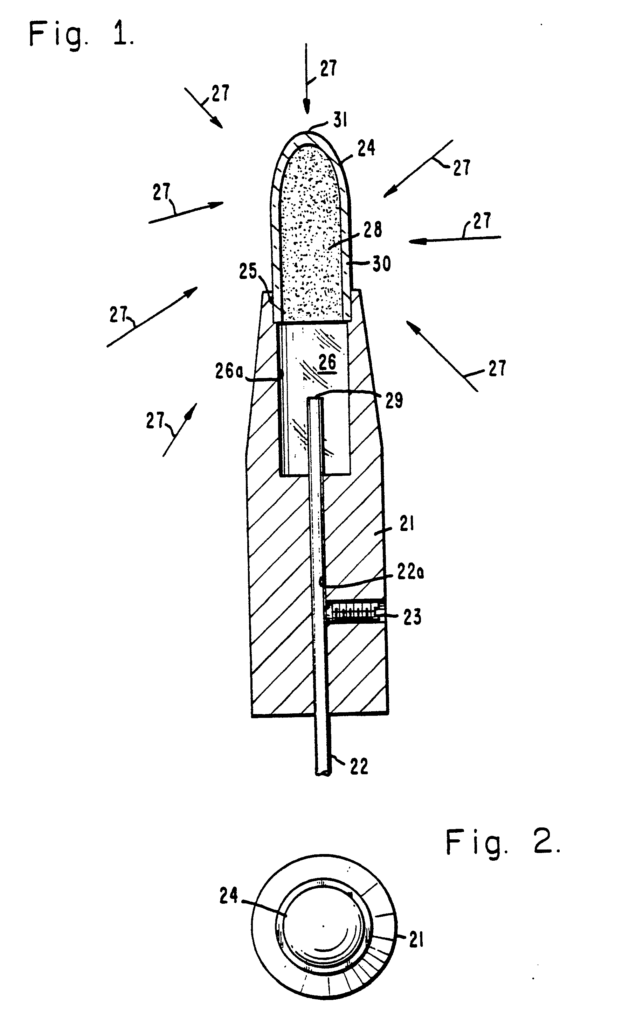

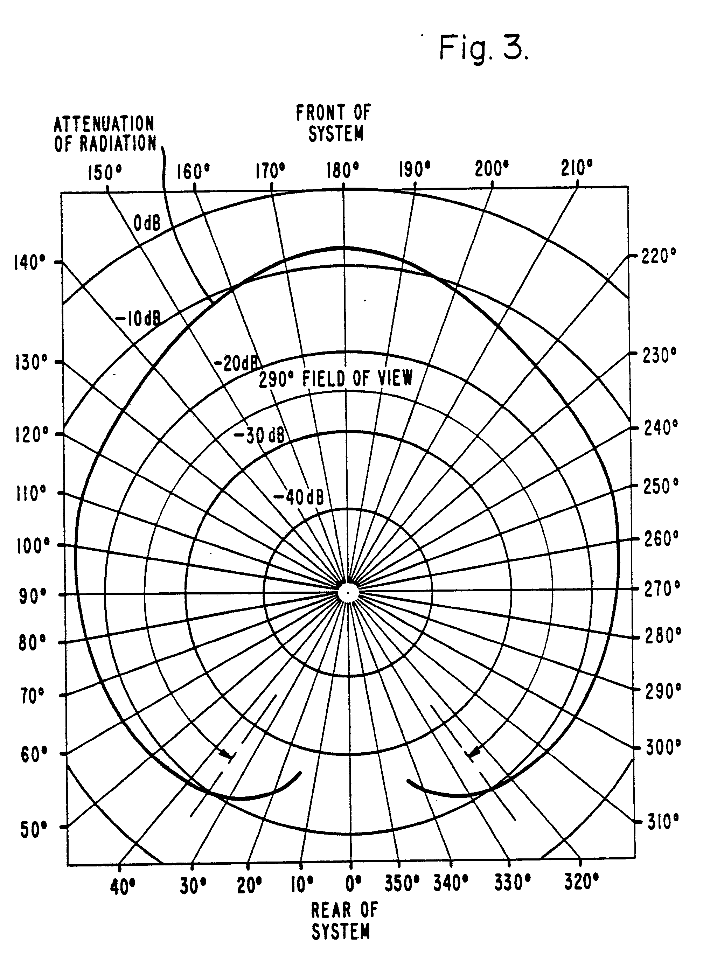

By way of example, in the art of light transmitting and receiving devices, the following united States patents are of interest. Miller, U.S. Patent 2 921 552, (Fig. 2) shows a dome having depressions on its inner surface. Harling, U.S. Patent 3 274 392, (Fig. 2) shows a dome partially coated with a reflective coating. Scott, U. S. Patent 3 576 563, (Fig. 2) shows a Fresnel lens. Canty, U.S. Patent 3 813 514, (Fig. 1) shows a light pipe with a diffuser on the end thereof. Kureyama et al, U.S. Patent 3 819 928, (Fig. 1) shows a transparent rod with a lens on the end thereof. Bowerman, U.S. Patent 3 923 375, (Fig. 1) shows a wedge reflector for a fiber optic guide. Amendolia, U.S. Patent 4 157 209, (Fig. 3) shows a light conduit having inner and outer reflecting surfaces. Eichweber, U.S. Patent 4 222 632, (Fig. 3) shows an optical conductor terminated in a prism.

The foregoing problem is overcome and other advantages are provided by a system of input or output ports adapted for connection to an optical fiber, which system can emit or collect radiation into or from space over an angular field of view greater than a hemisphere. The principle of the invention employs two modes of optical scattering, one for radiation from the forward direction and one for radiation from the backward direction. Both of these scattering mechanisms are employed with a smooth transition between forward scattering and backward scattering. The system of the invention results in a reduction in the intensity of radiation received or transmitted near the axis of the system with an increase in radiation received or transmitted in other directions. It is also to be noted that the system is not an imaging system in the sense that an image is brought to a focus at the entrance to the optical fiber. Rather, the system is a photon transmitter or collector and serves to detect the presence of light in a hyperhemispherical (greater than a hemisphere) region of space and is able to transmit light to such a region.

According to the present invention there is provided an optical system for the transmission of radiant energy to or from an optical waveguide over a spherical angle greater than a hemisphere, said system comprising:

a body having an open-ended cavity having an reflecting surface;

means for holding said waveguide with a terminus thereof situated within said cavity so as to be capable of receiving light reflected from the cavity's reflecting surface; and

a hollow dome closing off said open end of said cavity, said dome having a cylindrical side wall merging into an end portion located away from said cavity, said end portion of said dome having a curved surface of revolution, and wherein an interior surface of said dome has a rough texture, said dome being fabricated of a material transparent to radiant energy, and said rough texture providing for the redirection of rays of radiant energy propagating through said dome about the interior of said dome and within said cavity for coupling with said waveguide terminus.

The foregoing aspects and other features of the invention are explained in the following description, taken in connection with the accompanying drawings wherein:

Figure 1 is a longitudinal sectional view of an optical system incorporating the invention;

Figure 2 is a front end view of the system of Figure 1; and

Figure 3 is polar diagram of the attenuation in decibels (db) of the system of this invention as measured on a prototype device.

With reference to Figures 1 and 2, there is shown an optical system 20 incorporating the invention. The system 20 includes a support body 21 which receives an optical fiber 22 along a central bore 22A. The fiber 22 is held at any desired position within the bore 22A by a soft nosed set screw 23 disposed within the body 21.

In accordance with the invention, light from numerous directions (27), extending well over a hemisphere of space, is incident upon a scattering element constructed as hollow body 24. The body 24 is formed of a transparent material through which the light or other radiation can propagate. For example, the transparent body 24 may be fabricated of glass or a rigid plastic material, the selection of the glass and plastic material being based on the wavelength of the radiation that is to pass through it and the environment in which it is to operate. The transparent body 24 is secured within the support body 21 at a recess 25 formed circumferentially at a lip of the support body 21. Preferably, the transparent body 24 is bonded to the recess 25.

Furthermore, in accordance with the invention, the support body 21 includes a cavity 26 of cylindrical shape and disposed along a central axis of the support body 21. The cavity 26 is bounded by a wall 26A which is highly polished to serve as a reflector of the optical energy. Incident radiation, represented by arrows 27 is shown directed from various directions at the transparent body 24. In a preferred embodiment, the outer surface of the transparent body 24 is smooth while the interior surface 28 has a rough texture to provide for the scattering of light in both forward and backward directions. A rough external surface, while optically equal, will have a tendency to become soiled and opaque. A large portion of the incident light is reflected into the cavity 26. The end 29 of the optical fiber 22 is shown positioned at approximately the mid-point of the cavity 26, the location of the end 29 being adjusted for maximizing the coupling of optical energy to and from the fiber 22. The support body 21 may be fabricated of a polishable metal, such as aluminum, so as to permit the attainment of the mirrored surface on the wall 26A.

In operation, incident radiation 27 arriving at the device over a wide angular field of view is scattered at the rough internal surface 28 of the hollow transparent body 24. The transparent body 24 comprises a tubular neck 30 which supports, at its outer end, a closed end portion 31. The end portion 31 is rounded with a surface of revolution ranging from hemispherical to paraboloidal to prolate ellipsoidal depending on the desired angular sensitivity of the system 20. While the diameter of the neck may be varied along its axis, and while a departure from circular cross-section may be permitted for asymmetrical sensitivity, the preferred embodiment of the neck 30 employs a right-circular cylindrical form. The end portion 31 of the transparent body 24 thus provides a generally hollow ogival shape, particularly in the case of a pointed prolate elliptical surface. As mentioned above, the axial position of the fiber end 29 may be further adjusted for altering the angular responsivity of the system 20.

It has been found by experimentation that good results are obtained by adjusting the position of the end 29 of the fiber 22 for maximum output power while illuminating the transparent body 24 with collimated light incident at various angles to the longitudinal axis of the support body 21. It has also been found that the overall efficiency of the light gathering characteristic, or light emitting characteristic, of the system is dependent on the grain size of the interior surface 28, the rough regions of the surface 28 serving as a source of scattering of the optical energy. In addition to being dependent on the grain size of the surface 28, the efficiency is also dependent on the wavelength of the light used. For use with light from a helium-neon laser, adequate roughening of the surface 28 has been obtained by the use of FEPA 301 micron silicon-carbide abrasive (#60 grit size).

In the diagram of Figure 3, zero decibels represents the sensitivity of the unobstructed bare optical fiber 22 in the absence of the system 20. This provides a reference point for gauging the attenuation introduced by the scattering body 24. As can be seen from the graph, the ability of the system 20 to detect (or emit) radiation goes well beyond a hemisphere so that, with two of the units constructed in accordance with the invention, it is possible to sense incident radiation over 360° of space. Correspondingly, emission of optical energy from oppositely directed units incorporating the system 20 provides for illumination over a full sphere.

The actual dimensions of the hollow transparent ogival scattering body are unimportant since only the angles of field of view determine the operation of this invention. The configuration of the system can therefore be scaled with little or no effect on performance. In preferred embodiments employing multimode fibers, the diameter of the hollow transparent scattering body is between 150 and 500 times the core diameter of the waveguiding optical fiber attached to the device. The roughness of the scattering surface is related to the wavelength of the incoming or emerging radiation with the dimension of each minute scattering element being at least a multiple of the radiation wavelength.

It is to be understood that the above-described embodiment of the invention is illustrative only, and that modification thereof may occur to those skilled in the art. Accordingly, this invention is not to be regarded as limited to the embodiment disclosed herein, but is to be limited only as defined by the appended claims.

**Claims**

1. An optical system for the transmission of radiant energy to or from an optical waveguide (22) over a spherical angle greater than a hemisphere, said system comprising:

a body (21) having an open-ended cavity (26) having a reflecting surface (26a) ;

means (23) for holding said waveguide (22) with a terminus (29) thereof situated within said cavity (26) so as to be capable of receiving light reflected from the cavity's reflecting surface; and

a hollow dome (24) closing off said open end of said cavity (26), said dome having a cylindrical side wall (30) merging into an end portion (31) located away from said cavity (26), said end portion (31) of said dome (24) having a curved surface of revolution, and wherein an interior surface (28) of said dome has a rough texture, said dome being fabricated of a material transparent to radiant energy, and said rough texture providing for the redirection of rays of radiant energy propagating through said dome about the interior of said dome and within said cavity for coupling with said waveguide terminus.

2. A system according to Claim 1 wherein said surface of revolution is hemispherical.

3. A system according to Claim 1 wherein said surface of revolution is prolately ellipsoidal.

4. A system according to Claim 1 wherein said dome has a smooth outer surface.

5. A system according to Claim 1 wherein said scattering element has an ogival shape.

**Patentansprüche**

1. Optisches System zur Übertragung einer Strahlungsenergie zu oder von einem optischen Wellenleiter (22) über einen sphärischen Winkel, der größer ist als eine Halbkugel, welches aufweist:

einen Körper (21) mit einem am Ende offenen Hohlraum (26), welcher eine reflektierende Oberfläche (26a) hat;

eine Vorrichtung (23) zum Halten des Wellenleiters (22) mit einem Ende (29) davon innerhalb des Hohlraums (26), um so zum Empfangen von Licht in der Lage zu seine, welches von der reflektierenden Oberfläche des Hohlraums reflektiert wird; und

einen hohlen Dom (24) der das offene Ende des Hohlraums (26) abschließt, wobei der Dom eine zylindrische Seitenwand (30) hat, welche mit einem Endbereich (31) verschmolzen ist, der von dem Hohlraum (26) weg angeordnet ist, wobei der Endbereich (31) des Doms (24) eine gekrümmte Rotationsoberfläche hat und wobei eine Innenoberfläche (28) des Doms eine rauhe Beschaffenheit hat, wobei der Dom aus einem Material hergestellt ist, welches für die Strahlungsenergie transparent ist, und wobei die rauhe Beschaffenheit für die Richtungswiederherstellung der Strahlen der Strahlungsenergie dient, welche sich durch den Dom über das Innere des Doms und innerhalb des Hohlraums fortpflanzen, zur Kopplung mit dem Wellenleiteranschluß.

2. System nach Anspruch 1, wobei die Rotationsoberfläche halbkugelförmig ist.

3. System nach Anspruch 1, wobei die Rotationsoberfläche elliptisch gestreckt ist.

4. System nach Anspruch 1, wobei der Dom eine glatte äußere Oberfläche hat.

5. System nach Anspruch 1, wobei das Streuelement die Form eines Spitzbogens hat.

**Revendications**

1. Système optique pour la transmission d'énergie de rayonnement vers, ou à partir de, un guide d'ondes optiques (22) sur un angle sphérique supérieur à un hémisphère, ledit système comprenant :

un corps (21) ayant une cavité (26) ouverte à une extrémité et présentant une surface réfléchissante (26a) ;

des moyens (23) destinés à maintenir ledit guide d'ondes (22) de façon qu'une extrémité (29) de celui-ci soit située dans ladite cavité (26) pour pouvoir recevoir de la lumière réfléchie de la surface réfléchissante de la cavité ; et

un dôme creux (24) fermant ladite extrémité ouverte de ladite cavité (26), ledit dôme ayant une paroi latérale cylindrique (30) se prolongeant par une partie extrême (31) éloignée de ladite cavité (26), ladite partie extrême (31) dudit dôme (24) présentant une surface arrondie de révolution, et dans lequel une surface intérieure (28) dudit dôme possède une texture grossière, ledit dôme étant fabriqué en une matière transparente à l'énergie de rayonnement, et ladite texture grossière assurant le renvoi de rayons d'énergie de rayonnement se propageant à travers ledit dôme autour de l'intérieur dudit dôme et à l'intérieur de ladite cavité pour les appliquer à ladite extrémité du guide d'ondes.

2. Système selon la revendication 1, dans lequel ladite surface de révolution est hémisphérique.

3. Système selon la revendication 1, dans lequel ladite surface de révolution est en éllipsoïde prolongé.

4. Système selon la revendication 1, dans lequel ledit dôme présente une surface extérieure lisse.

5. Système selon la revendication 1, dans lequel ledit élément dispersant présente une forme ogivale.

# Fig. 1.

# Fig. 2.

Fig. 3.

ATTENUATION OF RADIATION

FRONT OF SYSTEM

REAR OF SYSTEM

290° FIELD OF VIEW

0dB
−10dB
−20dB
−30dB
−40dB